Europäisches Patentamt

European Patent Office

Office européen des brevets

(11) Numéro de publication: **0 002 395**
**B1**

# (12) FASCICULE DE BREVET EUROPEEN

(21) Numéro de dépôt: **78400128.1**

(22) Date de dépôt: **06.10.78**

(51) Int. Cl.³: **A 62 B 35/02//**
**B 60 R 21/10**

(54) Dispositif d'enroulement pour ceintures de sécurité

(30) Priorité: **07.12.77 FR 7736815**

(43) Date de publication de la demande:
**13.06.79 Bulletin 79/12**

(45) Mention de la délivrance du brevet:
**12.11.80 Bulletin 80/23**

(84) Etats contractants désignés:
**BE CH DE GB NL SE**

(56) Documents cités:
**DE - A - 2 242 523**
**DE - A - 2 419 193**
**DE - A - 2 428 564**
**FR - A - 2 093 523**
**FR - A - 2 190 016**
**FR - A - 2 292 493**
**US - A - 3 178 225**

(73) Titulaire: **REGIE NATIONALE DES USINES RENAULT**
**Boîte postale 103 8 - 10 avenue Emile Zola**
**F - 92109 Boulogne-Billancourt (FR)**

(72) Inventeur: **De Rosa, Daniel**
**7, Allée des Hautes Bruyères**
**F - 78320 Le Mesnil Saint Denis (FR)**

(74) Mandataire: **Ernst-Schonberg, Michel, et al**
**RNUR — S. 0804 B.P. 103**
**F - 92109 Boulogne-Billancourt (FR)**

Courier Press, Leamington Spa, England.

Dispositif d'enroulement pour ceintures de sécurité

L'invention due à la collaboration de M. de ROSA Daniel concerne un dispositif d'enroulement muni d'un limiteur de force pour ceintures de sécurité.

On sait que les enrouleurs automatiques sont destinés à permettre l'extraction de la ceinture de sécurité du dispositif lorsque le passager du véhicule exécute un mouvement lent. Si ce mouvement a lieu brusquement, un mécanisme de verrouillage empêche l'extraction de la ceinture de sécurité. La ceinture de sécurité peut être verrouillée également lorsqu'un ralentissement, dépassant une valeur déterminée, est imprimé au véhicule et à l'enrouleur.

L'enrouleur qui facilite la mise en place de la ceinture de sécurité garantit donc la liberté de mouvement de l'utilisateur.

Si le véhicule rencontre brusquement un obstacle, la ceinture de sécurité empêche l'utilisateur d'être projeté vers l'avant et le maintient sur son siège. Lorsque la décélération du véhicule est élevée, la charge à laquelle est soumis le corps sanglé par la ceinture de sécurité peut devenir exagérée et être à l'origine de lésions corporelles. Cette charge est légèrement abaissée par suite de l'allongement plastique de la ceinture de sécurité qui absorbe de l'énergie.

On connaît déjà des dispositifs d'enroulement associés à un limiteur de force dans un même ensemble. Le limiteur de force permet en général de freiner ou de bloquer l'axe d'enroulement de la ceinture jusqu'à une charge déterminée. Toutefois, comme la charge pouvant être supportée par les passagers d'un véhicules est variable, car elle dépend notamment de leur poids et de leur constitution, il a été proposé de régler le seuil de fonctionnement du limiteur.

Les améliorations successives des enrouleurs conduisent donc à une complexité relative de ces dispositifs.

Le document FR.A. 2 093 523 décrit un dispositif d'enroulement comportant un moyen dévideur, un organe de blocage dudit moyen dévideur et un limiteur d'effort constitué par une barre de torsion. La barre de torsion est incorporée dans le moyen dévideur et transforme l'effort de traction qui s'exerce sur la ceinture de sécurité, en déformation plastique de la barre de torsion.

Le document DE.A. 2 419 193 décrit un dispositif d'absorption d'énergie pour ceintures de sécurité comportant un élément compressible entouré par la sangle de la ceinture, dans lequel l'effort de traction agissant sur la sangle est transformé en effort de compression dudit élément.

Ces dispositifs ne permettent pas d'obtenir une tension préalable de la ceinture telle qu'elle est souhaitée pour augmenter l'efficacité desdites ceintures. Des expériences ont effectivement montré que les accélérations subies par le passager d'un véhicule lors d'une collision dépendent, dans une large mesure, du jeu existant entre la sangle et le corps de l'utilisateur de la ceinture. On a également proposé un vérin pyrotechnique de tension automatique des sangles d'une ceinture de sécurité. L'implantation correcte d'un tel vérin est difficilement réalisable sur les véhicules dont l'habitacle est de dimensions modestes. Pour y remédier, l'invention a pour objet un dispositif d'enroulement pour ceintures de sécurité muni de moyens de rétraction additionnels de la sangle pour immobiliser l'utilisateur lors d'une collision, les dits moyens facilitant l'allongement de la ceinture de sécurité pendant le déplacement de l'utilisateur.

L'invention vise encore une ceinture de sécurité avec dispositif d'enroulement qui possède un moyen dévideur, un organe de blocage dudit moyen dévideur et un limiteur d'effort associé au moyen dévideur. Dans sa forme de réalisation préférentielle, le dispositif d'enroulement, dont le moyen dévideur se compose d'un axe d'enroulement d'une sangle de la ceinture de sécurité et d'une douille compressible entourant ledit axe, qui peut prendre une première forme comportant un volume enveloppé par la sangle de la ceinture de sécurité et une deuxième forme comportant un volume différent enveloppé par ladite sangle après blocage préalable de l'axe, est caractérisé par le fait que l'espace compris entre l'axe d'enroulement et l'enveloppe externe de la douille déformable constitue au moins une partie du volume d'expansion de gaz libérés à la suite de la mise à feu d'une charge pyrotechnique. Les objets et avantages de l'invention seront mieux compris à l'aide de la description qui va suivre, d'exemples de réalisation, en référence au dessin annexé dont:

— La figure 1 est une vue en coupe du dispositif d'enroulement.

— La figure 2 est une vue en coupe de la bobine d'enroulement du dispositif représenté à la figure 1.

— La figure 3 est une vue en coupe d'une variante de réalisation de l'axe d'enroulement entouré par son manchon expansible.

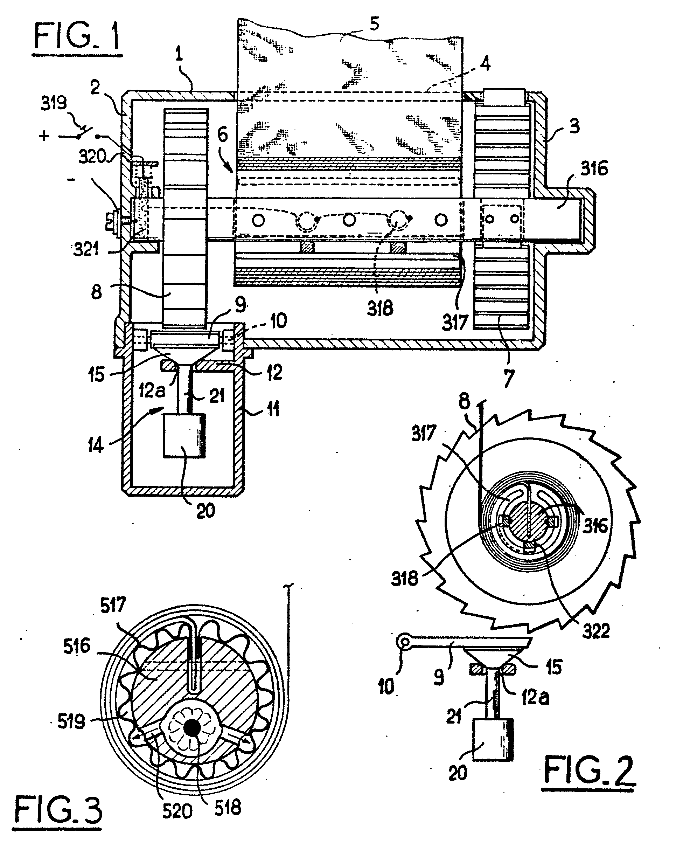

En se référant à la figure 1, la référence 1 désigne le carter du dispositif d'enroulement comportant deux couvercles d'extrémité 2, 3 et une fente longitudinale 4 livrant passage à une sangle de ceinture de sécurité 5 représentée partiellement enroulée sur un moyen dévideur dont les deux extrémités sont supportées par les couvercles 2, 3. Le dévideur 6 porte à une extrémité un ressort de rappel spiral 7 dont l'autre extrémité est attachée dans le carter 1. Le ressort spiral 7 est tendu de manière à exercer une traction d'enroulement sur le sangle 5. Une roue à rochet 8 est également montée solidaire en rotation du dévideur 6. La roue à rochet 8 peut coopérer avec un organe de blocage réalisé sous la forme d'un levier 9 monté à pivotement autour d'un axe 10 prévu dans un boîtier 11 fixé au carter 1. Le boîtier 11 comporte, par ailleurs, un support 12 percé d'un orifice 12 a, dans lequel s'appuie l'élément mobile de l'organe d'inertie 14. L'organe 14 peut être réalisé par exemple sous la forme d'un corps pendulaire constitué d'une tête tronconique 15 et ·d'un corps pesant ·20 reliés par une tige 21. Le fonctionnement du dispositif d'enroulement est bien connu. On rappellera simplement que le dévideur 6 enroule automatiquement la ceinture sous l'action de la force de rappel du ressort 7 et qu'il peut être bloqué à la suite de l'engagement du levier 9 sur l'une des dents de la roue à rochet 8. A cet effet, l'inertie du corps 20 permet d'obtenir le blocage du dévideur 6.

Selon le mode de réalisation représenté aux figures 1 et 2. Le moyen dévideur se compose d'un axe 316 d'enroulement et d'une douille déformable 317. Selon une caractéristique de l'invention, la douille déformable 317 est constituée par un manchon gonflable poreux sous l'action de la poussée de gaz libérés à la suite de la mise à feu d'une charge pyrotechnique 318. Ainsi, la douille déformable 317 prend une première forme gonflée comportant un certain volume de gaz enfermé. Au cours du gonflage de la douille déformable 317, son diamètre augmente, ce qui permet d'obtenir une tension préalable de la ceinture de sécurité même lorsque l'axe 316 est préalablement bloqué. L'effort de traction sur la sangle 5 exerce une contrainte de compression radiale de la douille déformable 317 préalablement gonflée. Celle-ci reprend alors sa forme dégonflée à la suite de l'échappement de gaz au travers des pores dilatés du manchon qui s'accompagne d'une réduction sensible de son volume et de son diamètre extérieur. Ce mode de fonctionnement permet donc d'obtenir également un allongement supplémentaire de la ceinture à l'extérieur du dispositif d'enroulement. Si un capteur non représenté réagit lorsque le véhicule dépasse une décélération prédeterminée, il actionne l'interrupteur 319 permettant ainsi l'établissement d'un courant d'allumage à la charge pyrotechnique 318. A cet effet, le contact fixe de l'interrupteur est relié à un contact frottant 320 qui repose sur une partie conductrice 321 de l'axe 316. Cette partie conductrice, électriquement isolée de l'axe 316, est reliée au moyen d'un fil conducteur à la charge pyrotechnique 318 placée dans la douille déformable 317. Il est à remarquer que la douille déformable 317 est immobilisée en rotation par rapport à l'axe 316 au moyen de cales 322 qui assurent la traversée du fil conducteur depuis l'axe 316 jusqu'aux charges pyrotechniques 318. Une autre borne d'alimentation de la charge pyrotechnique est prévue sur le couvercle 2 au moyen d'une cosse dont une partie vissée est en contact avec l'axe 316 conducteur. Selon le mode de réalisation représenté à la figure 3, le moyen dévideur se compose d'un axe 516 partiellement creux et d'une douille déformable 517 en tôle ondulée. Cette dernière est par exemple solidaire de l'axe 516 au moyen d'un cordon de soudure et délimite, avec la périphérie de l'axe 516, une chambre 519 d'expansion des gaz libérés par suite de la mise à feu de la charge pyrotechnique 518 placée dans l'axe 516. A cet effet, l'axe 516 possède une série de perçages 520 débouchant au contact de la paroi déformable de la douille déformable 517 et facilitant le passage des gaz de l'axe 516 vers la chambre 519. Le dispositif de mise à feu de la charge pyrotechnique 518 pourrait être par exemple celui qui a été décrit en référence des figures 1 et 2 mais tout autre dispositif équivalent pourrait être utilisé. Il serait, en effet, possible d'utiliser une charge pyrotechnique fixe disposée par exemple dans l'axe 516 et alimentée directement au travers du couvercle 2. Il est à noter que la partie pleine de l'axe 516 assure la retenue de l'extrémité libre de la sangle de la ceinture de sécurité.

## Revendications

1. Dispositif d'enroulement pour ceintures de sécurité qui possède un moyen dividueur composé d'un axe (316, 516) d'enroulement d'une sangle de la ceinture de sécurité et d'une douille déformable 317, 517 entourant ledit axe qui peut prendre une première forme comportant un volume enveloppé par la sangle et une deuxième forme comportant un volume différent enveloppé par ladite sangle après blocage préalable de l'axe, caractérisé par le fait que l'espace compris entre l'axe (316, 516) d'enroulement et l'enveloppe externe de la douille déformable (317, 517) constitue au moins une partie du volume d'expansion des gaz libérés à la suite de la mise à feu d'une charge pyrotechnique (318, 518).

2. Dispositif d'enroulement selon la revendication 1, caractérisé par le fait que la douille déformable (317) qui entoure l'axe (316) d'enroulement de la ceinture est constituée par un manchon gonflable poreux sous l'action d'une charge pyrotechnique (318) intérieure dont la mise à feu libère un volume de gaz.

3. Dispositif d'enroulement selon l'une quelconque des revendications 1 ou 2, caractérisé par le fait que la charge pyrotechnique (318, 518) est placée dans 1'axe (516) d'enroulement creux, ce dernier étant muni de perçages (520) débouchant au contact de la paroi déformable de la douille déformable (517) solidaire dudit axe (516).

## Patentansprüche_

1. Aufwickelvorrichtung für Sicherheitsgurte, mit einer als Achse (316, 516) ausgebildeten Aufwickelspule für das Gurtband und mit einer deformierbaren, die Achse umgebenden Hülse (317, 517), die eine erste Form aufweisen kann, bei der sie ein erstes Volumen einschließt, das vom Gurtband umschlungen ist und eine zweite Form aufweisen kann, wobei sie ein unterschiedliches Volumen einschließt, das vom Gurtband umschlungen ist, nach vorheriger Verriegelung der Achse, dadurch gekennzeichnet, daß der zwischen der Aufwickelachse (316, 516) und der Außenwand der deformierbaren Hülse (317, 517) eingeschlossene Raum zumindest einen Teil des Ausdehnungsvolumens für die durch das Zünden einer pyrotechnischen Ladung (318, 518) freigesetzten Gase ist.

2. Vorrichtung nach Anspruch 1, dadurch gekennzeichnet, daß die die Aufwickelachse (316) des Gurtes umgebende, deformierbare Hülse (317) aus einer porösen Hülle besteht, die unter der Einwirkung einer in ihrem Inneren angeordneten pyrotechnischen Ladung (318), deren Zündung eine Gasmenge freisetzt, aufblasbar ist.

3. Vorrichtung nach einem der Ansprüche 1 oder 2, dadurch gekennzeichnet, daß die pyrotechnische Ladung (318, 518) in der hohlen Aufwickelachse (516) angeordnet ist und daß die Achse Öffnungen (520) aufweist, die bis zur deformierbaren Wand der mit der Achse (516) fest verbundenen, deformierbaren Hülse (517) reichen.

## Claims

1. A winding device for safety belts, which has a reeling means comprising a shaft (316, 516) for winding a webbing portion of the safety belt and a deformable sleeve (317, 517) disposed around said shaft, which can assume a first shape comprising a volume enclosed by the webbing portion and a second shape comprising a different volume enclosed by said webbing portion after previous locking of the shaft, characterised in that the space between the winding shaft (316, 516) and the outside casing of the deformable sleeve (317, 517) constitutes at least a part of the volume for expansion of the gases liberated following firing of a pyrotechnic charge (318, 518).

2. A winding device according to claim 1 characterised in that the deformable sleeve (317) which is disposed around the belt winding shaft (316) comprises a sleeve member which is inflatable and porous under the action of an internal pyrotechnic charge (318), the firing of which liberates a volume of gas.

3. A winding device according to either one of claims 1 and 2 characterised in that the pyrotechnic charge (318, 518) is placed in the hollow winding shaft (516), the shaft being provided with openings (520) which open into contact with the deformable wall of the deformable sleeve (517) which is fixed with respect to said shaft (516).

FIG. 1

FIG. 2

FIG. 3